# EUROPÄISCHE PATENTSCHRIFT

(11) **EP 3 580 530 B1**
(45) Veröffentlichungstag und Bekanntmachung des Hinweises auf die Patenterteilung: **24.03.2021**
(21) Anmeldenummer: 18706450.6
(22) Anmeldetag: 13.02.2018
(51) Int. Cl.: G01F 23/00, B67C 3/00, B67C 7/00, G01F 23/24, G01F 23/26, G01F 23/284, G01F 23/296

(54) **VORRICHTUNG ZUM BEFÜLLEN EINES BEHÄLTERS MIT EINEM FÜLLPRODUKT**
DEVICE FOR FILLING A CONTAINER WITH A FILLING PRODUCT
DISPOSITIF DE REMPLISSAGE D'UN CONTENANT AVEC UN PRODUIT DE REMPLISSAGE

(30) Priorität: 13.02.2017 DE 102017102852
(43) Veröffentlichungstag der Anmeldung: 18.12.2019
(73) Patentinhaber: Krones AG, 93073 Neutraubling (DE)
(72) Erfinder: ZIEGLER, Manfred, 93073 Neutraubling (DE)
(74) Vertreter: Nordmeyer, Philipp Werner
(86) Internationale Anmeldenummer: PCT/EP2018/053485
(87) Internationale Veröffentlichungsnummer: WO 2018/146324

(56) Entgegenhaltungen:
- EP-A1- 2 343 518
- EP-A1- 2 719 655
- DE-U1- 29 609 831
- US-A1- 2009 064 757

## Beschreibung

### Technisches Gebiet

Die vorliegende Erfindung betrifft eine Vorrichtung zum Befüllen eines Behälters mit einem Füllprodukt, beispielsweise eine Getränkeabfüllanlage zum Abfüllen eines Getränks in einen Getränkebehälter.

### Technischer Hintergrund

In Getränkeabfüllanlagen ist es bekannt, das Füllprodukt, welches nachfolgend in zu befüllende Behälter abgefüllt wird, an unterschiedlichen Positionen innerhalb der Getränkeabfüllanlage zwischenzuspeichern. Beispielsweise ist es bekannt, ein Füllproduktreservoir in Form eines Ringkessels oder eines Zentralkessels direkt auf einem Füller der Getränkeabfüllanlage vorzusehen, wobei in dem Füllproduktreservoir das abzufüllende Füllprodukt unmittelbar vor der Abfüllung vorgehalten wird. Von dem Füllproduktreservoir aus wird das Füllprodukt dann zu dem jeweiligen Füllventil geleitet, mittels welchem das Füllprodukt dann gesteuert in der gewünschten Menge, der gewünschten Masse, dem gewünschten Gewicht oder der gewünschten Füllhöhe in den zu befüllenden Behälter geleitet wird.

Weitere Füllproduktreservoirs sind in einer Getränkeabfüllanlage beispielsweise in Form von Puffertanks vorgesehen. Ein solcher Puffertank kann beispielsweise vor und nach einer Sterilisierungsanlage, beispielsweise einer Kurzzeiterhitzungsanlage, vorgesehen sein, um einen vorgegebenen Füllproduktfluss durch die Sterilisierungsanlage hindurch zur Sterilisierung des Füllprodukts mit den vorgegebenen Parametern aufrechterhalten zu können. Dies ist von Bedeutung, um insbesondere eine vorgegebene Behandlungszeit innerhalb der Sterilisierungsanlage beibehalten zu können, unabhängig davon, wie hoch die nachfolgende Abnahme des Füllprodukts, beispielsweise bei Anlagenstörungen am Füller, zum jeweiligen Zeitpunkt ist. Eine solche Vorrichtung ist in EP 2 719 655 A1 offenbart.

Weitere Füllproduktreservoirs können auch in Form eines beigestellten Füllprodukttanks an einem Füller oder in Form von Tanks, in welchen die Karbonisierung des Füllprodukts vorgenommen wird, vorgesehen sein. Es können weitere Füllproduktreservoirs in unterschiedlicher Ausprägung, Volumen und Position in einer Füllproduktabfüllanlage vorgesehen sein. Beispielsweise kann in einer Füllproduktabfüllanlage auch ein Produktionstank vorgesehen sein, in welchem das Füllprodukt vor der eigentlichen Abfüllung in die Behälter zunächst hergestellt, zusammengemischt oder in anderer Form bereitgestellt wird.

Den genannten Füllproduktreservoirs ist gemeinsam, dass es zur Steuerung beziehungsweise zur Regelung der Komponenten einer Füllproduktabfüllanlage häufig gefordert ist, das aktuell in dem jeweiligen Füllproduktreservoir vorliegende Fluidniveau zu bestimmen. Dies kann beispielsweise notwendig sein, da in dem Füllproduktreservoir zur verlässlichen Führung des jeweiligen Füllproduktabfüllverfahrens ein konstantes Füllproduktniveau gefordert ist, oder aber um vorgelagerte oder nachgelagerte Prozessschritte zu variieren, beispielsweise zu beschleunigen, zu verlangsamen, zu beenden oder auszulösen.

Entsprechend sind in bekannten Füllproduktabfüllanlagen die Füllproduktreservoirs oder zumindest einige der vorgesehenen Füllproduktreservoirs mit Füllstandsonden versehen, mittels welchen das Füllproduktniveau innerhalb des jeweiligen Füllproduktreservoirs bestimmt werden kann.

Weiterhin ist bekannt, die füllproduktführenden Wege innerhalb einer Füllproduktabfüllanlage zu reinigen, um die Füllproduktabfüllanlage in einem hygienisch einwandfreien Zustand zu halten und die Produktreinheit bei Produktwechseln zu gewährleisten. Hierzu sind unterschiedliche Verfahren zur Behandlung der jeweiligen füllproduktberührten Oberflächen bekannt, beispielsweise ein vollständiges Durchspülen der füllproduktführenden Leitungen sowie der jeweiligen Füllproduktreservoirs oder auch ein Behandeln der jeweiligen füllproduktberührten Oberflächen mittels innerhalb der füllproduktführenden Bereiche und insbesondere innerhalb der Füllproduktreservoirs vorgesehener Sprühdüsen.

Um innerhalb der Füllproduktabfüllanlage sicherzustellen, dass auch der Reinigungsvorgang zuverlässig durchgeführt wird, wurden bislang die Füllstandsonden, welche zur Bestimmung des Füllproduktniveaus während des Abfüllbetriebs verwendet werden, auch zur Bestimmung eines Reinigungsfluidniveaus während des jeweiligen Reinigungsbetriebes verwendet.

Eine Vorrichtung zum Bestimmen eines Fluidniveaus und einer Fluidqualität sowie von Fehlern in einer Detektionsvorrichtung und Problemen in einer Fluidzuführung ist beispielsweise aus der US 2015/0013646 A1 bekannt, in welcher eine Füllstandsonde zur Ermittlung des Füllproduktniveaus und ein dazu separater kapazitiver Sensor zur Ermittlung weiterer Merkmale und insbesondere der Fluidqualität des Füllprodukts vorgesehen sind.

### Darstellung der Erfindung

Ausgehend von dem bekannten Stand der Technik ist es eine Aufgabe der vorliegenden Erfindung, eine Vorrichtung zum Befüllen eines Behälters mit einem Füllprodukt anzugeben, welche sowohl einen zuverlässigen und effizienten Abfüllbetrieb als auch einen zuverlässigen und effizienten Reinigungsbetrieb ermöglicht.

Diese Aufgabe wird durch eine Vorrichtung mit den Merkmalen des Anspruchs 1 gelöst. Vorteilhafte Weiterbildungen ergeben sich aus den Unteransprüchen, der vorliegenden Beschreibung sowie der Figur.

Entsprechend wird eine Vorrichtung zum Befüllen eines Behälters mit einem Füllprodukt, bevorzugt zum Befüllen eines Getränkebehälters in einer Getränkeabfüllanlage, umfassend ein Füllproduktreservoir zur Aufnahme des abzufüllenden Füllprodukts und eine erste Füllstandsonde zur Bestimmung des Füllproduktniveaus im Füllproduktreservoir während eines Abfüllbetriebs vorgeschlagen. Erfindungsgemäß ist eine zweite Füllstandsonde zur Bestimmung eines Reinigungsfluidniveaus im Füllproduktreservoir während eines Reinigungsbetriebs vorgesehen.

Dadurch, dass eine erste Füllstandsonde vorliegt, welche zur Bestimmung des Füllproduktniveaus während des Abfüllbetriebs vorgesehen ist, kann die für den Abfüllbetrieb benötigte Information bezüglich des Füllproduktniveaus innerhalb eines Füllproduktreservoirs bereitgestellt werden. Die erste Füllstandsonde kann entsprechend so an das jeweilige, abzufüllende Füllprodukt angepasst werden, dass ein effizienter und zuverlässiger Abfüllbetrieb gewährleistet ist.

Die zweite Füllstandsonde ist zur Bestimmung des Reinigungsfluidniveaus im Füllproduktreservoir während des Reinigungsbetriebes vorgesehen. Entsprechend kann die zweite Füllstandsonde an die jeweiligen Eigenschaften und Bedingungen des Reinigungsbetriebs angepasst werden, um während des Reinigungsbetriebs eine zuverlässige Aussage über das jeweilige Reinigungsfluidniveau in dem Füllproduktreservoir zu erhalten. Entsprechend kann eine zuverlässige und effiziente Reinigung durchgeführt werden.

Unter Abfüllbetrieb wird hierin eine Betriebsart der Vorrichtung zum Befüllen eines Behälters verstanden, in welcher das eigentliche Füllprodukt hergestellt, bereitgestellt, modifiziert, portioniert und in den zu befüllenden Behälter eingebracht wird.

Unter Reinigungsbetrieb wird hierin eine Betriebsart der Vorrichtung zum Befüllen eines Behälters verstanden, in welcher eine Reinigung insbesondere der füllproduktberührten Wege und Komponenten der Vorrichtung vorgenommen wird. Der Reinigungsbetrieb wird üblicher Weise turnusgemäß nach einigen Betriebsstunden im Abfüllbetrieb, nach behobenen Anlagenstörungen oder bei Produktwechseln durchgeführt.

Damit wird eine Vorrichtung angegeben, mittels welcher aufgrund des Bereitstellens der ersten Füllstandsonde das Füllproduktniveau innerhalb des Füllproduktreservoirs für die unterschiedlichen in der Vorrichtung verarbeiteten und abgefüllten Fluide im Abfüllbetrieb effizient und sicher ermittelt werden kann. In der Vorrichtung wird weiterhin mittels des Bereitstellens der zweiten Füllstandsonde das Reinigungsmedienniveau im Reinigungsbetrieb effizient und sicher ermittelt.

Beispielsweise kann es für die Abfüllung von hochviskosen Produkten, wie beispielsweise Babybrei, Ketchup, Mayonnaise, bestimmten Milchprodukten etc. notwendig sein, in dem Füllproduktreservoir eine Füllstandsonde vorzusehen, welche an die speziellen Eigenschaften des Füllprodukts angepasst ist. Beispielsweise sind Füllstandsonden, welche mechanisch bewegliche Teile wie beispielsweise Schwimmer aufweisen, für die Messung eines Füllstandes eines hochviskosen Produkts, beispielsweise von Ketchup, nicht geeignet. Insbesondere können diese hochviskosen Produkte dazu führen, dass die den Schwimmer führende Mechanik "verklebt" und damit ein Gleichlauf zwischen Schwimmer und Fluidniveau nicht mehr zuverlässig gegeben ist.

Zur Abfüllung von Füllprodukten, welche eine niedrige Dielektrizitätskonstante aufweisen, eignen sich beispielsweise kapazitive Füllstandsonden oder Füllstandsonden, die auf einer geführten Mikrowelle basieren, nicht. Für Füllprodukte, die nur wenige Ionen aufweisen, sind resistive Füllstandssonden nicht geeignet. Entsprechend kann die erste Füllstandsonde, welche zur Ermittlung des Füllstandes während des Füllbetriebs vorgesehen ist, an das jeweilige Füllprodukt angepasst werden um eine zuverlässige und schnelle Bestimmung des Füllproduktniveaus zu erreichen.

Hierzu kann die erste Füllstandsonde bevorzugt ein schwimmerloses Messsystem umfassen, beispielsweise ein induktives Messsystem und/oder ein resistives Messsystem und/oder ein kapazitives Messsystem und/oder ein auf einer geführten Mikrowelle basierendes Messsystem und/oder ein optisches Messsystem und/oder ein optoelektronisches Messsystem und/oder ein Ultraschall Messsystem. Mittels eines solchen schwimmerlosen Messsystems kann das Füllproduktniveau zuverlässig, schnell und prozesssicher gemessen werden.

Die zweite Füllstandsonde ist bevorzugt so vorgesehen, dass sie das Niveau eines Reinigungsfluides innerhalb des Füllproduktreservoirs bestimmen kann. Insbesondere dann, wenn die Innenreinigung des Füllproduktreservoirs über Sprühdüsen vorgenommen wird, sind schwimmerlose Messsysteme teilweise überfordert beziehungsweise können keine zuverlässige Messungen durchführen, da der schwimmerlose Sensor weitgehend oder vollständig mit Sprühnebel oder Sprühstrahlen des Reinigungsfluids beaufschlagt ist.

Aufgrund des durch die Sprühdüse auftretenden Sprühnebels und der Sprühstrahlen innerhalb des Füllproduktreservoirs kann entsprechend eine Messung, beispielsweise mit einem resistiven, kapazitiven oder auch auf Grundlage einer geführten Mikrowelle beziehungsweise optischen Füllhöhenmesssystems basierenden Messystems nicht zuverlässig durchgeführt werden. Durch die Belegung des gesamten Sensors beziehungsweise großer Bereiche des Sensors mit dem Sprühnebel und/oder der Sprühstrahlen kann möglicherweise sogar ein Sondenkurzschluss erzeugt werden, so dass eine zuverlässige Füllhöhenbestimmung nicht ermöglicht wird.

Entsprechend ist die zweite Füllstandsonde bevorzugt eine solche, welche mit den niedrig-viskosen Reinigungsflüssigkeiten eine zuverlässige Füllhöhenbestimmung ermöglicht und ist besonders bevorzugt eine Füllstandsonde, welche einen Schwimmer umfasst, beispielsweise ein Messsystem, welches einen mit einem Wegaufnehmer gekoppelten Schwimmer umfasst.

Die Vorrichtung weist besonders bevorzugt eine Steuervorrichtung auf, welche dazu eingerichtet ist, im Abfüllbetrieb die Abfüllung des Füllprodukts in den zu befüllenden Behälter zu steuern oder zu regeln und das Füllproduktniveau im Füllproduktreservoir über die erste Füllstandsonde zu bestimmen.

Die Vorrichtung weist weiterhin bevorzugt eine Steuervorrichtung auf, welche dazu eingerichtet ist, den Reinigungsbetrieb zu steuern und/oder zu regeln und im Reinigungsbetrieb das Reinigungsfluidniveau im Füllproduktreservoir über die zweite Füllstandsonde zu bestimmen.

Die Steuervorrichtung ist bevorzugt dazu eingerichtet, sowohl den Reinigungsbetrieb als auch den Abfüllbetrieb zu steuern oder zu regeln, wobei im Abfüllbetrieb die Bestimmung des Füllproduktniveaus im Füllproduktreservoir mittels der ersten Füllstandsonde und im Reinigungsbetrieb die Bestimmung des Reinigungsfluidniveaus mittels der zweiten Füllstandsonde vorgenommen wird.

Das Füllproduktreservoir ist bevorzugt ein Füllprodukttank und/oder ein beigestellter Füllprodukttank und/oder ein Puffertank und/oder ein Puffertank einer Sterilisations- oder Pasteurisierungsvorrichtung und/oder ein Karbonisierungstank und/oder ein Füllerkessel und/oder ein Zentralkessel und/oder ein Ringkessel. Mit anderen Worten kann das Füllproduktreservoir ein beliebiger Tank innerhalb der Vorrichtung zum Befüllen eines Behälters sein, in welchem das Füllproduktniveau während des Abfüllbetriebs bestimmt werden muss. Zum Abfüllbetrieb zählen neben dem eigentlichen Einfüllen des Füllprodukts in den zu befüllenden Behälter auch das Bereitstellen, Herstellen oder Bearbeiten des Füllprodukts vor dem eigentlichen Einfüllen beispielsweise durch Herstellen, Mischen, Sterilisieren oder Pasteurisieren des Füllprodukts.

Bevorzugt steht das Füllproduktreservoir in Kommunikation mit einem Füllventil zum Steuern des Befüllens des zu befüllenden Behälters mit dem Füllprodukt, besonders bevorzugt in direkter Kommunikation. Durch das Füllventil kann in an sich bekannter Weise das Füllprodukt aus dem Füllproduktreservoir in den zu befüllenden Behälter geleitet werden, wobei der Füllvorgang dann anhand des Füllproduktniveaus kontrolliert oder beeinflusst werden kann.

Unter direkter Kommunikation wird hierin verstanden, dass das Füllventil ohne Zwischenschaltung weiterer Anlagenkomponenten (außer Leitungen) mit dem Füllproduktreservoir verbunden ist. Entsprechend ist das Füllventil unmittelbar am Füllproduktreservoir angebracht oder es ist lediglich eine Leitung zwischen dem Füllproduktreservoir und dem Füllventil vorgesehen.

In einer bevorzugten Weiterbildung ist in dem Füllproduktreservoir eine Vorrichtung zum Beaufschlagen der füllproduktberührten Oberflächen des Füllproduktreservoirs mit einem Reinigungsfluid vorgesehen, bevorzugt eine Sprühdüse zum Besprühen der füllproduktberührten Oberflächen des Füllproduktreservoirs mit dem Reinigungsfluid. Die Sprühdüse ist bevorzugt in einem oberen Bereich des Füllproduktreservoirs vorgesehen, um ein Eintauchen der Sprühdüse in das Füllprodukt im Abfüllbetrieb zu vermeiden.

Die oben genannte Aufgabe wird auch durch ein Verfahren mit den Merkmalen des Anspruchs 9 gelöst, bei welchem das Füllproduktniveau im Füllproduktreservoir im Abfüllbetrieb durch eine erste Füllstandsonde bestimmt wird und ein Reinigungsmedienniveau im Füllproduktreservoir im Reinigungsbetrieb durch eine zweite Füllstandsonde bestimmt wird.

Die vorteilhaften Weiterbildungen und Vorteile der Vorrichtung, die oben genannt sind, sind analog auch für das Verfahren relevant.

### Kurze Beschreibung der Figuren

Bevorzugte weitere Ausführungsformen der Erfindung werden durch die nachfolgende Beschreibung der Figur näher erläutert. Dabei zeigt:

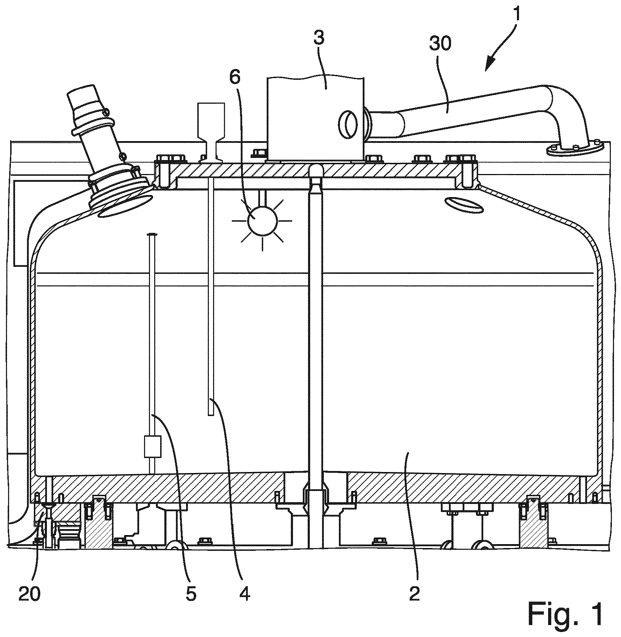

- Figur 1: eine schematische, perspektivische und teilgeschnittene Darstellung durch ein Füllproduktreservoir mit einer ersten Füllstandsonde und einer zweiten Füllstandsonde.

### Detaillierte Beschreibung bevorzugter Ausführungsbeispiele

Im Folgenden werden bevorzugte Ausführungsbeispiele anhand der Figur beschrieben.

In Figur 1 ist in einer perspektivischen, teilgeschnittenen und schematischen Darstellung ein Füllproduktreservoir 2 einer Vorrichtung 1 zum Befüllen eines hier nicht gezeigten Behälters mit einem Füllprodukt gezeigt.

Das Füllproduktreservoir 2 ist in dem in Figur 1 gezeigten Ausführungsbeispiel in Form eines Zentralkessels eines Füllers der Vorrichtung 1 zum Befüllen des Behälters dargestellt. Entsprechend stehen mit dem Füllproduktreservoir 2 schematisch dargestellte Füllventile 20 in Kommunikation, über welche das sich im Füllproduktreservoir 2 befindliche Füllprodukt gesteuert oder geregelt in den jeweiligen zu befüllenden Behälter leiten lässt. Das Füllventil 20 kann auch in direkter Kommunikation, also ohne Zwischenschaltung weiterer Anlagenkomponenten (außer Leitungen), mit dem Füllproduktreservoir 2 in Kommunikation stehen.

Um bei bestimmten Füllverfahren das gewünschte Füllproduktniveau, die gewünschte Füllproduktmasse beziehungsweise das gewünschte Füllproduktvolumen in dem jeweiligen zu befüllenden Behälter zu erreichen, muss das über den jeweiligen Füllventilen 20 anstehende Füllprodukt auf einem konstanten Füllproduktniveau gehalten werden, um den hydrostatischen Druck an jedem Füllventil 20 stabil zu halten und damit definierte Verhältnisse für die Betätigung der Füllventile 20 zu erreichen.

In alternativen Füllverfahren kann das Füllproduktniveau im Füllproduktreservoir 2 auch variieren, die Höhe des jeweiligen Füllproduktniveaus im Füllproduktreservoir 2 muss dann jedoch bei manchen der alternativen Füllverfahren der jeweiligen Steuerungsvorrichtung übergeben werden, um entsprechend das Verhalten der Füllventile 20 so zu steuern beziehungsweise zu regeln, dass das gewünschte Füllergebnis auch bei einem variierenden hydrostatischen Druck am jeweiligen Füllventil 20 erreicht werden kann.

In das Füllproduktreservoir 2 wird das Füllprodukt beispielsweise über einen schematisch angedeuteten Drehverteiler 3 und eine Füllproduktzuleitung 30 zugeleitet, wobei die Zuleitung des Füllprodukts über die Füllproduktzuleitung 30 mittels einer Steuervorrichtung so gesteuert wird, dass das im Füllproduktreservoir 2 gewünschte Füllproduktniveau erreicht wird.

Um das Füllproduktniveau innerhalb des Füllproduktreservoirs 2 zu bestimmen, ist eine erste Füllstandsonde 4 vorgesehen, welche im gezeigten Ausführungsbeispiel als eine schwimmerlose Füllstandsonde dargestellt ist. Die erste Füllstandsonde 4 ist hier beispielsweise ein induktives Messsystem, ein resistives Messsystem, ein kapazitives Messsystem, ein auf einer geführten Mikrowelle basierendes Messsystem, ein optisches Messsystem, ein optoelektronisches Messsystem und/oder ein Ultraschall Messsystem. Die Füllstandsonde 4 kann entsprechend an die Eigenschaften des verarbeiteten Füllprodukts angepasst werden.

Die Steuervorrichtung verwendet damit während des Abfüllbetriebes beispielsweise zur Ansteuerung der Zuführung des Füllprodukts in das Füllproduktreservoir 2 und/oder zur Ansteuerung der Füllventile 20 und/oder zur Beeinflussung des Steuer- oder Regelverhaltens der Füllventile 20 die erste Füllstandsonde 4, also hier das schwimmerlose Messsystem, um das Füllproduktniveau im Füllproduktreservoir 2 zu bestimmen.

Um einen hygienisch einwandfreien Abfüllbetrieb zu ermöglichen und um eine Produktreinheit der abgefüllten Produkte sicherzustellen, wird das Füllproduktreservoir 2 turnusmäßig oder bei einem Produktwechsel gereinigt. Zu Reinigung werden zumindest die füllproduktberührten Oberflächen der Vorrichtung 1 mit einem Reinigungsfluid beaufschlagt und bevorzugt wird das Reinigungsfluid durch die füllproduktberührten Bereiche der Vorrichtung 1 geleitet.

Unter Reinigungsfluid werden hier sämtliche Medien verstanden, die zur Reinigung, Sterilisierung und/oder Desinfektion der füllproduktberührten Bereiche der Vorrichtung 1 verwendet werden. Insbesondere jedoch werden die füllproduktberührten Bereiche der Vorrichtung 1 zu Beginn des Reinigungsbetriebs zunächst mit einem Reinigungsfluid ausgespült.

In dem gezeigten Ausführungsbeispiel ist zu Beaufschlagung der füllproduktberührten Oberflächen des Füllproduktreservoirs 2 mit dem Reinigungsfluid eine Sprühdüse 6 vorgesehen. Mittels der Sprühdüse 6 kann der Innenraum des Füllproduktreservoirs 2 mit dem jeweiligen Reinigungsfluid so beaufschlagt werden, dass die Innenflächen des Füllproduktreservoirs 2 gereinigt werden.

Bei dieser Reinigung des Füllproduktreservoirs 2 ist es notwendig, dass die Oberflächen vollständig mit dem Reinigungsfluid beaufschlagt werden, so dass entsprechend neben der einzelnen schematisch eingezeichneten Sprühdüse 6 auch eine Mehrzahl von Sprühdüsen im oberen Bereich und auch in anderen Bereichen des Füllproduktreservoirs 2 vorgesehen sein können, um eine lückenlose Beaufschlagung aller Oberflächen zu erreichen.

Vorteilhaft an der Verwendung von Sprühdüsen 6 ist, dass zwar die gesamte Innenoberfläche des Füllproduktreservoirs 2 mit dem Reinigungsfluid beaufschlagt werden kann, der Reinigungsmedienbedarf dennoch relativ gering gehalten werden kann. Insbesondere ist es nicht notwendig, das Füllproduktreservoir 2 bis unter die Decke vollständig mit dem Reinigungsfluid zu füllen, sondern es kann mit einem wesentlich geringeren Reinigungsmedienvolumen eine vollständige Reinigung der Oberflächen des Füllproduktreservoirs 2 vorgenommen werden.

Die Sprühdüse 6 erzeugt jedoch Sprühstrahlen und Sprühnebel im Innenraum des Füllproduktreservoirs 2 derart, dass auch die erste Füllstandsonde 4 vollständig mit dem gesprühten Reinigungsfluid beaufschlagt wird. Bei Verwendung eines schwimmerlosen Messsystems für die erste Füllstandsonde 4 kann entsprechend im Reinigungsbetrieb eine zuverlässige Bestimmung des Reinigungsfluidniveaus im Füllproduktreservoir 2 nicht vorgenommen werden. Insbesondere kann - je nach verwendetem schwimmerlosem Messsystem - das im Reinigungsbetrieb auch auf die erste Füllstandsonde 4 gesprühte Reinigungsfluid zu einem Sondenkurzschluss führen, so dass eine sinnvolle Messung überhaupt nicht möglich ist.

Entsprechend ist in dem Füllproduktreservoir 2 eine zweite Füllstandsonde 5 vorgesehen, welche in dem gezeigten Ausführungsbeispiel in Form eines Messsystems mit einem Schwimmer vorgesehen ist. Aufgrund des Schwimmers der zweiten Füllstandsonde 5 kann das tatsächlich in dem Füllproduktreservoir 2 anstehende Reinigungsfluidniveau zuverlässig bestimmt werden. Die Messung dieses Reinigungsfluidniveaus im Füllproduktreservoir 2 mittels der zweiten Füllstandsonde 5 wird durch den von der Sprühdüse 6 erzeugten Sprühnebel und die Sprühstrahlen nicht oder zumindest nicht merklich beeinflusst.

Eine marginale aber funktional unbedenkliche Beeinflussung des Schwimmers kann sich im Reinigungsbetrieb dadurch ergeben, dass sich der Sprühnebel auf die nicht in das Reinigungsmedium eintauchenden Teile des Schwimmers legt und sich wegen des daher marginal erhöhten Gewichts des Schwimmers ein marginal tieferes Eintauchen des Schwimmers ergibt, was in einer marginal geringeren Ablesung des Schwimmersignals resultiert, die aber gegenüber den Schwankungen des Reinigungsmedienniveaus funktional unbedeutend ist.

Entsprechend kann während des Reinigungsbetriebs zuverlässig festgestellt werden, ob im Füllproduktreservoir 2 ein für die jeweilige Reinigung vorgegebenes Reinigungsmedienniveau erreicht wird. Das Erreichen eines solchen Reinigungsmedienniveaus innerhalb des Füllproduktreservoirs 2 kann deshalb von Bedeutung sein, um sicherzustellen, dass der Boden des Füllproduktreservoirs 2 mit Reinigungsmedium bedeckt ist und somit sämtliche Füllventile 20 zuverlässig aus dem Füllproduktreservoir 2 heraus mit dem Reinigungsfluid beaufschlagt werden.

Entsprechend ist eine erste Füllstandsonde 4 vorgesehen, welche zur Bestimmung des Füllproduktniveaus im Füllproduktreservoir 2 während des Abfüllbetriebes verwendet wird, und eine zweite Füllstandsonde 5 ist vorgesehen, welche zur Bestimmung des Reinigungsfluidniveaus im Füllproduktreservoir 2 während des Reinigungsbetriebes verwendet wird.

Eine Steuervorrichtung ist entsprechend dazu eingerichtet, während des Abfüllbetriebes das Füllproduktniveau über die erste Füllstandsonde 4 zu ermitteln und während des Reinigungsbetriebs das Reinigungsmedienniveau im Füllproduktreservoir 2 mittels der zweiten Füllstandsonde 5 zu ermitteln.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichen

- 1: Vorrichtung zum Befüllen eines Behälters mit einem Füllprodukt
- 2: Füllproduktreservoir
- 20: Füllventil
- 3: Drehverteiler
- 30: Füllproduktzuführung
- 4: erste Füllstandsonde
- 5: zweite Füllstandsonde
- 6: Sprühdüse

## Patentansprüche

1. Vorrichtung (1) zum Befüllen eines Behälters mit einem Füllprodukt, bevorzugt zum Befüllen eines Getränkebehälters in einer Getränkeabfüllanlage, umfassend ein Füllproduktreservoir (2) zur Aufnahme des abzufüllenden Füllprodukts und eine erste Füllstandsonde (4) zur Bestimmung des Füllproduktniveaus im Füllproduktreservoir (2) während eines Abfüllbetriebs,
**gekennzeichnet durch**
eine zweite Füllstandsonde (5) zur Bestimmung eines Reinigungsfluidniveaus im Füllproduktreservoir (2) während eines Reinigungsbetriebs.

2. Vorrichtung (1) gemäß Anspruch 1, **dadurch gekennzeichnet, dass** die erste Füllstandsonde (4) ein schwimmerloses Messsystem umfasst, und bevorzugt ein induktives Messsystem und/oder ein resistives Messsystem und/oder ein kapazitives Messsystem und/oder ein auf einer geführten Mikrowelle basierendes Messsystem und/oder ein optisches Messsystem und/oder ein optoelektronisches Messsystem und/oder ein Ultraschall Messsystem ist.

3. Vorrichtung (1) gemäß Anspruch 1 oder 2, **dadurch gekennzeichnet, dass** die zweite Füllstandsonde (5) ein mit einem Schwimmer versehenes Messsystem umfasst und bevorzugt einen mit einem Wegaufnehmer gekoppelten Schwimmer umfasst.

4. Vorrichtung (1) gemäß einem der vorstehenden Ansprüche, **dadurch gekennzeichnet, dass** eine Steuervorrichtung vorgesehen ist, welche dazu eingerichtet ist, den Abfüllbetrieb zu steuern und/oder zu regeln, wobei die Steuervorrichtung dazu eingerichtet ist, im Abfüllbetrieb das Füllproduktniveau im Füllproduktreservoir (2) über die erste Füllstandsonde (4) zu bestimmen.

5. Vorrichtung (1) gemäß einem der vorstehenden Ansprüche, **dadurch gekennzeichnet, dass** eine Steuervorrichtung, bevorzugt die Steuervorrichtung aus Anspruch 4, vorgesehen ist, welche dazu eingerichtet ist, den Reinigungsbetrieb zu steuern und/oder zu regeln, wobei die Steuervorrichtung dazu eingerichtet ist, im Reinigungsbetrieb das Reinigungsfluidniveau im Füllproduktreservoir (2) über die zweite Füllstandsonde (5) zu bestimmen.

6. Vorrichtung (1) gemäß einem der vorstehenden Ansprüche, **dadurch gekennzeichnet, dass** das Füllproduktreservoir (2) ein Füllprodukttank und/oder ein beigestellter Füllprodukttank und/oder ein Puffertank und/oder ein Puffertank einer Sterilisations- oder Pasteurisierungsvorrichtung und/oder ein Karbonisierungstank und/oder ein Füllerkessel eines Füllers und/oder ein Zentralkessel eines Füllers und/oder ein Ringkessel eines Füllers ist.

7. Vorrichtung (1) gemäß einem der vorstehenden Ansprüche, **dadurch gekennzeichnet, dass** das Füllproduktreservoir (2) in Kommunikation mit einem Füllventil (20) zum Steuern des Befüllens des zu befüllenden Behälters mit dem Füllprodukt steht, bevorzugt in direkter Kommunikation.

8. Vorrichtung (1) gemäß einem der vorstehenden Ansprüche, **dadurch gekennzeichnet, dass** in dem Füllproduktreservoir (2) eine Vorrichtung zum Beaufschlagen der füllproduktberührten Oberflächen des Füllproduktreservoirs (2) mit einem Reinigungsfluid vorgesehen ist, bevorzugt eine Sprühdüse (6) zum Besprühen der füllproduktberührten Oberflächen des Füllproduktreservoirs (2) mit dem Reinigungsfluid.

9. Verfahren zum Befüllen eines Behälters mit einem Füllprodukt, bevorzugt zum Befüllen eines Getränkebehälters in einer Getränkeabfüllanlage, wobei ein Füllproduktreservoir (2) zur Aufnahme des abzufüllenden Füllprodukts und eine erste Füllstandsonde (4) zur Bestimmung des Füllproduktniveaus im Füllproduktreservoir (2) vorgesehen sind und das Füllproduktniveau im Füllproduktreservoir (2) während eines Abfüllbetriebs mittels der ersten Füllstandsonde (4) bestimmt wird,
**dadurch gekennzeichnet, dass**
ein Reinigungsfluidniveau im Füllproduktreservoir (2) während eines Reinigungsbetriebs mittels einer zweiten Füllstandsonde (5) bestimmt wird.

## Claims

1. Device (1) for filling a container with a filling product, preferably for filling a beverage container in a beverage bottling plant, comprising a filling product reservoir (2) for receiving the filling product to be bottled and a first filling level probe (4) for determining the filling product level in the filling product reservoir (2) during a bottling operation,
**characterised by**
a second filling level probe (5) for determining a cleaning fluid level in the filling product reservoir (2) during a cleaning operation.

2. Device (1) according to claim 1, **characterised in that** the first filling level probe (4) comprises a float-free measuring system, and preferably an inductive measuring system and/or a resistive measuring system and/or a capacitive measuring system and/or a measuring system based on a guided microwave and/or an optical measuring system and/or an optoelectronic measuring system and/or an ultrasonic measuring system.

3. Device (1) according to claim 1 or 2, **characterised in that** the second filling level probe (5) comprises a measuring system provided with a float and preferably a float coupled to a position sensor.

4. Device (1) according to any of the preceding claims, **characterised in that** a control device is provided which is configured to control and/or regulate the bottling operation, wherein the control device is configured in the bottling operation to determine the filling product level in the filling product reservoir (2) via the first filling level probe (4).

5. Device (1) according to any of the preceding claims, **characterised in that** a control device is provided, preferably the control device from claim 4, which is configured to control and/or regulate the cleaning operation, wherein the control device is configured in the cleaning operation to determine the cleaning fluid level in the filling product reservoir (2) via the second fill level probe (5).

6. Device (1) according to any of the preceding claims, **characterised in that** the filling product reservoir (2) is a filling product tank and/or an auxiliary filling product tank and/or a buffer tank and/or a buffer tank of a sterilisation or pasteurisation device and/or a carbonisation tank and/or a filler bowl of a filler and/or a central bowl of a filler and/or a ring bowl of a filler.

7. Device (1) according to any of the preceding claims, **characterised in that** the filling product reservoir (2) is in communication with a filling valve (20) for controlling the filling of the container to be filled with the filling product, preferably in direct communication.

8. Device (1) according to any of the preceding claims, **characterised in that** in the filling product reservoir (2) a device is provided for charging the filling product-contacted surfaces of the filling product reservoir (2) with a cleaning fluid, preferably a spray nozzle (6) for spraying the filling product-contacted surfaces of the filling product reservoir (2) with the cleaning fluid.

9. Method for filling a container with a filling product, preferably for filling a beverage container in a beverage bottling plant, wherein a filling product reservoir (2) is provided for receiving the filling product to be bottled and a first filling level probe (4) is provided for determining the filling product level in the filling product reservoir (2) and the filling product level in the filling product reservoir (2) is determined during a bottling operation by means of the first filling level probe (4),
**characterised in that**
a cleaning fluid level is determined in the filling product reservoir (2) during a cleaning operation by means of a second filling level probe (5).

## Revendications

1. Dispositif (1) pour le remplissage d'un conteneur avec un produit de remplissage, de préférence pour le remplissage d'un conteneur de boissons dans une installation de remplissage de boissons, comprenant un réservoir de produit de remplissage (2) pour recevoir le produit de remplissage à remplir et une première sonde de niveau de remplissage (4) pour la détermination du niveau de produit de remplissage dans le réservoir de produit de remplissage (2) pendant une opération de remplissage,
**caractérisé par**
une seconde sonde de niveau de remplissage (5) pour la détermination d'un niveau de fluide de nettoyage dans le réservoir de produit de remplissage (2) pendant une opération de nettoyage.

2. Dispositif (1) selon la revendication 1, **caractérisé en ce que** la première sonde de niveau de remplissage (4) comprend un système de mesure sans flotteur, et, de préférence, est un système de mesure inductif et/ou un système de mesure résistif et/ou un système de mesure capacitif et/ou un système de mesure basé sur une micro-onde guidée et/ou un système de mesure optique et/ou un système de mesure optoélectronique et/ou un système de mesure à ultrasons.

3. Dispositif (1) selon la revendication 1 ou 2, **caractérisé en ce que** la seconde sonde de niveau de remplissage (5) comprend un système de mesure pourvu d'un flotteur et, de préférence, comprend un flotteur couplé à un capteur de déplacement.

4. Dispositif (1) selon l'une quelconque des revendications précédentes, **caractérisé en ce qu'**un dispositif de commande est prévu, lequel est configuré pour commander et/ou régler l'opération de remplissage, selon lequel le dispositif de commande est configuré pour déterminer, pendant l'opération de remplissage, le niveau de produit de remplissage dans le réservoir de produit de remplissage (2) par l'intermédiaire de la première sonde de niveau de remplissage (4).

5. Dispositif (1) selon l'une quelconque des revendications précédentes, **caractérisé en ce qu'**un dispositif de commande, de préférence le dispositif de commande selon la revendication 4, est prévu, lequel est configuré pour commander et/ou régler l'opération de nettoyage, selon lequel le dispositif de commande est configuré pour déterminer, pendant l'opération de nettoyage, le niveau de fluide de nettoyage dans le réservoir de produit de remplissage (2) par l'intermédiaire de la seconde sonde de niveau de remplissage (5).

6. Dispositif (1) selon l'une quelconque des revendications précédentes, **caractérisé en ce que** le réservoir de produit de remplissage (2) est une cuve de produit de remplissage et/ou une cuve de produit de remplissage mise à disposition et/ou une cuve tampon et/ou une cuve tampon d'un dispositif de stérilisation ou de pasteurisation et/ou une cuve de carbonatation et/ou un bassin d'installation de remplissage d'une installation de remplissage et/ou un bassin central d'une installation de remplissage et/ou un bassin annulaire d'une installation de remplissage.

7. Dispositif (1) selon l'une quelconque des revendications précédentes, **caractérisé en ce que** le réservoir de produit de remplissage (2) est en communication avec une soupape de remplissage (20) pour commander le remplissage du conteneur à remplir avec le produit de remplissage, de préférence en communication directe.

8. Dispositif (1) selon l'une quelconque des revendications précédentes, **caractérisé en ce que,** dans le réservoir de produit de remplissage (2), un dispositif pour alimenter les surfaces du réservoir de produit de remplissage (2) en contact avec le produit de remplissage avec un fluide de nettoyage est prévu, de préférence une buse de pulvérisation (6) pour pulvériser les surfaces du réservoir de produit de remplissage (2) en contact avec le produit de remplissage avec le fluide de nettoyage.

9. Procédé pour le remplissage d'un conteneur avec un produit de remplissage, de préférence pour le remplissage d'un conteneur de boissons dans une installation de remplissage de boissons, selon lequel un réservoir de produit de remplissage (2) pour recevoir le produit de remplissage à remplir et une première sonde de niveau de remplissage (4) pour la détermination du niveau de produit de remplissage dans le réservoir de produit de remplissage (2) sont prévus, et le niveau de produit de remplissage dans le réservoir de produit de remplissage (2), pendant une opération de remplissage, est déterminé au moyen de la première sonde de niveau de remplissage (4),
**caractérisé en ce**
**qu'**un niveau de fluide de nettoyage dans le réservoir de produit de remplissage (2) est déterminé pendant une opération de nettoyage au moyen d'une seconde sonde de niveau de remplissage (5).
